# EUROPÄISCHE PATENTSCHRIFT

(11) **EP 4 519 589 B1**
(45) Veröffentlichungstag und Bekanntmachung des Hinweises auf die Patenterteilung: **27.05.2026**
(21) Anmeldenummer: 23717486.7
(22) Anmeldetag: 04.04.2023
(51) Int. Cl.: F16H 63/30, F16H 57/00

(54) **MONTAGEANORDNUNG FÜR EIN KOPPELGETRIEBE EINES KRAFTFAHRZEUGS**
MOUNTING ASSEMBLY FOR A COUPLER MECHANISM OF A MOTOR VEHICLE
ENSEMBLE DE MONTAGE POUR UN MÉCANISME D'ACCOUPLEMENT D'UN VÉHICULE À MOTEUR

(30) Priorität: 03.05.2022 DE 102022110808
(43) Veröffentlichungstag der Anmeldung: 12.03.2025
(73) Patentinhaber: Bayerische Motoren Werke Aktiengesellschaft, 80809 München (DE)
(72) Erfinder: ZELGER, Klaus, 82024 Taufkirchen (DE)
(86) Internationale Anmeldenummer: PCT/EP2023/058813
(87) Internationale Veröffentlichungsnummer: WO 2023/213485

(56) Entgegenhaltungen:
- EP-A1- 2 392 840
- DE-T5- 112013 001 019

## Beschreibung

Die Erfindung betrifft eine Montageanordung für ein Koppelgetriebe eines Kraftfahrzeugs, welche bei einem Zusammenbau des Koppelgetriebes bei dessen Montage zu montierenden Komponenten und eine Montagevorrichtung umfasst. Anhand derartiger Koppelgetriebe ist es beispielsweise möglich, eine Drehmomentübertragung zwischen der elektrischen Antriebsmaschine und Antriebsrädern eines Kraftfahrzeugs bedarfsgerecht zu unterbrechen (Entkoppelungsstellung) und damit beispielsweise ein sogenanntes Segeln des Kraftfahrzeugs bei dessen Fahrbetrieb zu ermöglichen, sowie die Drehmomentübertragung herzustellen (Koppelungsstellung) um ein Antreiben der Antriebsräder mittels der Antriebsmaschine zu ermöglichen.

Eine derartige Montaganordnung mit einer entsprechenden Montagevorrichtung dient zur Erleichterung der Montage mehrerer Komponenten des Koppelgetriebes beim Zusammenbau des Koppelgetriebes.

Die DE 11 2013 001 019 T5 offenbart eine Gangschaltung für ein Fahrzeug, welche ein Getriebe und eine Schaltwählvorrichtung umfasst. Das Getriebe hat eine Mehrzahl von Gängen und eine Schaltwählwelle. Die Schaltwählvorrichtung weist ein Gehäuse und einen Schalthebel auf, der mit der Schaltwählwelle eingreift. Die Schaltwählvorrichtung weist auch einen Wahlhebel auf, der eine Welle enthält, die in dem Gehäuse gelagert ist und entlang einer Wellenachse verläuft. Der Wählhebel weist ferner einen äußeren Hebel auf, der mit der Welle verbunden ist. Der Wahlhebel hat ferner einen inneren Hebel mit einem ersten Ende, das mit der Welle verbunden ist, und ist entlang der Wellenachse zwischen einer Installationsstellung und einer Betriebsstellung beweglich. Der innere Hebel hat ferner ein zweites Ende, das mit der Schaltwählwelle verbunden ist, wenn das erste Ende sich in der Betriebsstellung befindet, und ein zweites Ende auf Abstand zu der Schaltwählwelle, wenn sich das erste Ende in der Installationsstellung befindet. Aus der EP 2 392 840 A1 ist ein Verfahren zur Montage, in der richtigen relativen Winkelposition, eines Paars von Drehtrommeln einer sequentiellen Getriebesteuergerätvorrichtung mit doppelter Trommel für ein Motorfahrzeuggetriebe bekannt.

Aufgabe der vorliegenden Erfindung ist es, eine Montageanordnung der eingangs genannten Art bereitzustellen, welche eine vereinfachte Montage verschiedener Komponenten eines Koppelgetriebes bei dessen Zusammenbau ermöglicht.

Die Erfindung geht aus von einer Montageanordnung für ein Koppelgetriebe eines Kraftfahrzeugs, umfassend bei einem Zusammenbau des Koppelgetriebes bei dessen Montage zu montierende Komponenten, von welchen
- ein Schaltelement einer der Komponenten entspricht, welches zum Schalten einer Kupplung des Koppelgetriebes ausgebildet ist,
- wenigstens ein erstes Federelement einer der Komponenten entspricht, welches verschiebbar an dem Schaltelement aufgenommen ist und welches zur zumindest mittelbaren federkraftvorgespannten Abstützung an einem Gehäuse des Koppelgetriebes ausgebildet ist,
wobei die Montageanordnung eine im fertig hergestellten Zustand des Koppelgetriebes von den Komponenten getrennte Montagevorrichtung umfasst, welche ein Sicherungselement mit einem ersten Sicherungselementende und einem zweiten Sicherungselementende aufweist, von welchen zumindest das erste Sicherungselementende reversibel lösbar mit dem Schaltelement gekoppelt ist und dadurch das erste Federelement bei der Montage gegenüber einem Abgleiten von dem Schaltelement sichert und die Komponenten mittels der Montagevorrichtung verliersicher zusammengehalten werden.

Dies ist von Vorteil da hierdurch eine gleichzeitige Montage mehrerer Komponenten des Koppelgetriebes erfolgen kann, wobei die Komponenten mittels der Montagevorrichtung verliersicher zusammengehalten und in diesem Zustand ordnungsgemäß verbaut werden können. Durch die reversible Lösbarkeit kann die Montagevorrichtung nach dem bestimmungsgemäßen Verbau der Komponenten rückstandslos und zerstörungsfrei von den Komponenten getrennt und für die Montage etwaiger weiterer Koppelgetriebe genutzt werden. Hierdurch können Ressourcen geschont werden. Die Montagevorrichtung kann auch als Montagewerkzeug bezeichnet werden.

Mittels des Schaltelements kann die Kupplung geschaltet werden. So kann mittels des Schaltelements beispielsweise wenigstens ein Kupplungselement der Kupplung relativ zu einem anderen Kupplungselement der Kupplung bewegt und dadurch die Kupplung geschaltet werden. Beispielsweise kann das Schaltelement zum Schalten des Koppelgetriebes, zumindest zwischen einer Koppelungsstellung, in welcher eine elektrische Antriebsmaschine des Kraftfahrzeugs Drehmoment übertragend mit einem Antriebsrad des Kraftfahrzeugs gekoppelt ist, und einer Entkoppelungsstellung, in welcher die elektrische Antriebsmaschine von dem Antriebsrad entkoppelt ist, ausgebildet sein.

In einer vorteilhaften Weiterbildung der Erfindung ist vorgesehen, dass die Montageanordnung ein zweites Federelement als eine der Komponenten umfasst, welches zumindest mittelbar mit einem zur Verlagerung eines Parksperrelements einer Parksperrvorrichtung des Kraftfahrzeugs zwischen einer Parksperrstellung und einer Entsperrstellung ausgebildeten Exzenterelement als eine der Komponenten gekoppelt ist. Dies ist von Vorteil, da hierdurch das zweite Federelement anhand der Montagevorrichtung mit montiert und dadurch insgesamt mit der Montageanordnung eine gemeinsame Montage von Komponenten mit verschiedenen Funktionen erfolgen kann. Die Montagevorrichtung kann das zweite Federelement vorzugsweise vor einem Abgleiten des zweiten Federelements von dem Schaltelement sichern.

In einer weiteren vorteilhaften Weiterbildung der Erfindung ist vorgesehen, dass das erste Sicherungselementende reversibel lösbar in eine an dem Schaltelement angeordnete, erste Öffnung eingeführt ist, und das zweite Sicherungselementende in eine an dem Exzenterelement angeordnete, zweite Öffnung. Dies ist von Vorteil, da durch das Einführen des jeweiligen Sicherungselementendes in die jeweilige Öffnung besonders viele Bewegungsfreiheitsgrade des jeweiligen Sicherungselementendes eingeschränkt sind, wodurch ein unerwünschtes Lösen des Sicherungselements von den Komponenten der Montageanordnung erschwert wird.

Das erste Sicherungselementende kann vorzugsweise formschlüssig, also unter Ausbildung eines Formschlusses mit dem Schaltelement in die erste Öffnung eingeführt sein. Das zweite Sicherungselementende kann vorzugsweise formschlüssig, also unter Ausbildung eines Formschlusses mit dem Exzenterelement in die zweite Öffnung eingeführt sein. Der Formschluss ermöglicht ein aufwandsarmes, zerstörungsfreies (reversibles) Lösen des entsprechenden Sicherungselementendes von dem Schaltelement bzw. dem Exzenterelement. Besonders bevorzugt kann das Sicherungselement bei in die erste Öffnung eingeführtem, ersten Sicherungselementende und bei in die zweite Öffnung eingeführtem, zweitem Sicherungselementende in einem elastisch verformten Zustand sein. Dadurch wird auf besonders zuverlässige Weise eine Verspannung des Sicherungselements erzielt, wodurch ein unerwünschtes Lösen des Sicherungselements während der Montage verhindert werden kann.

In einer weiteren vorteilhaften Weiterbildung der Erfindung ist vorgesehen, dass die erste Öffnung und die zweite Öffnung windschief zueinander orientiert sind. Darunter kann verstanden werden, dass eine der ersten Öffnung zugeordnete erste Öffnungsmittelachse windschief zu einer der zweiten Öffnung zugeordneten, zweiten Öffnungsmittelachse orientiert ist. Durch die windschiefe Anordnung kann ein einfaches elastisches Verspannen des Sicherungselements mit dem Schaltelement und dem Exzenterelement erfolgen. Durch das Verspannen wird ein ungewolltes Lösen des Sicherungselements und damit der gesamten Montagevorrichtung bei der Montage verhindert. Darüber hinaus kann durch die windschiefe Anordnung ein unerwünschtes Lösen der Montagevorrichtung von den Komponenten auf einfache Weise verhindert werden, da vorzugsweise vorgesehen sein kann, dass das Lösen beispielsweise nur durch elastische Verformung des Sicherungselements erfolgen kann.

In einer weiteren vorteilhaften Weiterbildung der Erfindung ist vorgesehen, dass das zweite Federelement mittels des zweiten Sicherungselementendes zumindest zur Montage der Komponenten gegenüber einem Abgleiten von dem Schaltelement gesichert ist. Dies ist von Vorteil, da hierdurch eine Vielzahl an Komponenten mit unterschiedlichen Funktionen gleichzeitig beim Heranführen der Montageanordnung, beispielsweise an das Gehäuse des Koppelgetriebes, montiert werden können. Durch das Sichern des zweiten Federelements kann vermieden werden, dass dieses Federelement bei der Montage beispielsweise manuell gehalten werden muss, was bei geringem verfügbarem Bauraum schwierig sein kann.

In einer weiteren vorteilhaften Weiterbildung der Erfindung ist vorgesehen, dass das erste Federelement und das zweite Federelement in deren Anordnung an dem Schaltelement gegenüber deren jeweiligem Abgleiten in Längsstreckungsrichtung des Schaltelements zwischen dem ersten Sicherungselementende und dem zweiten Sicherungselementende gesichert gehalten sind. Dies ist von Vorteil, da durch die Anordnung der beiden Federelemente zwischen den Sicherungselementenden ein besonders einfaches und wirksames Sichern der Federelemente gegenüber einem Abgleiten von dem Schaltelement erzielt werden kann. So können das erste Sicherungselementende und das zweite Sicherungselementende gemeinsam das erste und zweite Federelement zumindest bereichsweise umgreifen. Zwischen den beiden Federelementen kann das Schaltelement eine Verdickung aufweisen, welche verhindern kann, dass sich die beiden Federelemente in unerwünschter Weise in deren Anordnung an dem Schaltelement aufeinander zu bewegen. So kann beispielsweise in Axialerstreckungsrichtung des Schaltelements folgende Reihenfolge vorliegen: Erstes Sicherungselementende - erstes Federelement - Verdickung - zweites Federelement - zweites Sicherungselementende.

In einer weiteren vorteilhaften Weiterbildung der Erfindung ist vorgesehen, dass die Montageanordnung ein erstes Zahnrad als eine der Komponenten umfasst und ein das erste Sicherungselementende und das zweite Sicherungselementende verbindender Sicherungselementmittelbereich das erste Zahnrad umgreift. Durch das Umgreifen wird eine besonders einfache, lösbare Verbindung zwischen dem ersten Zahnrad und den weiteren Komponenten geschaffen, ohne an dem ersten Zahnrad Bohrungen oder andere Befestigungsmöglichkeiten vorsehen zu müssen. Das erste Zahnrad des Koppelgetriebes kann zum zumindest mittelbaren Eingriff mit der Antriebsmaschine dienen. Mit anderen Worten kann das erste Zahnrad zur zumindest mittelbaren drehmomentübertragenden Koppelung mit der Antriebsmaschine ausgebildet sein. Bei zusammengebautem Koppelgetriebe kann das erste Zahnrad dementsprechend mit einem, mit einer Rotorwelle der Antriebsmaschine gekoppelten, antriebsmaschinenseitigen Zahnrad in Eingriff stehen.

In einer weiteren vorteilhaften Weiterbildung der Erfindung ist vorgesehen, dass der Sicherungselementmittelbereich in eine Zahnradaussparung des ersten Zahnrades eingreift. Dadurch ist ein besonders platzsparendes, lösbares Verbinden des ersten Zahnrades mit dem Sicherungselement bzw. der Montagevorrichtung ermöglicht. So kann zur lösbaren Koppelung zwischen dem ersten Zahnrad und der Montagevorrichtung auf ein Bauraum beanspruchendes, umfangsseitiges Umgreifen des ersten Zahnrades anhand der Montagevorrichtung bzw. des Sicherungselements verzichtet werden, welches beispielswiese ein Ineingriffbringen des ersten Zahnrades mit weiteren Verzahnungen erschweren kann. Vorzugsweise kann der Sicherungselementmittelbereich in der Zahnradaussparung verspannt sein, wodurch ein unerwünschtes Lösen oder Herausrutschen des Sicherungselementmittelbereichs von dem ersten Zahnrad besonders einfach vermieden werden kann.

In einer weiteren vorteilhaften Weiterbildung der Erfindung ist vorgesehen, dass der Sicherungselementmittelbereich einen zum Halten der Montageanordnung während der Montage ausgebildeten Haltegriffbereich aufweist. Dies erleichtert in vorteilhafter Weise die manuelle Montage der Komponenten, da die gesamte Montageanordnung anhand des Haltegriffbereichs zur Montage manuell an einen entsprechenden Verbauort herangeführt werden kann. Der Haltegriffbereich kann vorzugsweise in der Zahnradaussparung verspannt sein. Dadurch kann eine besonders sichere Fixierung der Montagevorrichtung und des ersten Zahnrades für die Montage erfolgen.

In einer weiteren vorteilhaften Weiterbildung der Erfindung ist vorgesehen, dass die Montagevorrichtung wenigstens ein, einen Kontakt des Sicherungselements mit dem ersten Zahnrad bei der Montage unterbindendes und mit dem Sicherungselement verbundenes Schutzelement umfasst. Dies dient zur einfachen Vermeidung von durch Kontakt, insbesondere metallischen Kontakt, zwischen dem ersten Zahnrad und dem Sicherungselement. Das Schutzelement kann vorzugsweise aus einem Kunststoff gebildet sein. Dadurch kann ein besonders einfacher Schutz vor Beschädigungen des Sicherungselements und/oder des ersten Zahnrades erzielt werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung, welche durch die nachfolgenden Ansprüche bestimmt wird, zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: eine schematische Perspektivansicht eines Stirnradgetriebes, welches ein Koppelgetriebe umfasst und mit einer elektrischen Antriebsmaschine gekoppelt ist, die zum Antreiben eines Antriebsrades eines stark abstrahiert dargestellten Kraftfahrzeugs dient, wobei das Kraftfahrzeug eine Parksperrvorrichtung, eine Kupplung zum Schalten des Koppelgetriebes sowie eine Betätigungsvorrichtung umfasst;
- Fig. 2: eine Draufsicht auf das Koppelgetriebe, die elektrische Antriebsmaschine, die Parksperrvorrichtung, die Kupplung sowie die Betätigungsvorrichtung;
- Fig. 3: eine Schnittdarstellung gemäß einer in Fig. 2 gezeigten Schnittebene A;
- Fig. 4: eine weitere Schnittdarstellung gemäß einer in Fig. 2 gezeigten Schnittebene B; und
- Fig. 5: eine weitere Schnittdarstellung gemäß einer in Fig. 2 gezeigten Schnittebene C.
- Fig. 6: eine Draufsicht auf einen Teilbereich des Koppelgetriebes, welcher zumindest teilweise eine errfindungsgemäße Montageanordnung für das Koppelgetriebe mit einer Mehrzahl an bei einem Zusammenbau des Koppelgetriebes bei dessen Montage zu montierenden Komponenten und mit einer Montagevorrichtung zeigt;
- Fig. 7: eine Seitenansicht eines geschnitten dargestellten Teilbereichs in Längserstreckungsrichtung eines Schaltelements als eine der Komponenten, wobei ein Sicherungselementende eines Sicherungselements der Montagevorrichtung reversibel lösbar in eine an dem Schaltelement (62) angeordnete, erste Öffnung eingeführt ist;
- Fig. 8: eine schematische Perspektivansicht der Montagevorrichtung, welche das Sicherungselement sowie mit dem Sicherungselement verbundene Schutzelemente aufweist;
- Fig. 9: eine weitere schematische Perspektivansicht, welche die erfindungsgemäße Montageanordnung teilweise zeigt, und anhand welcher erkennbar ist, dass in windschief zueinander orientierte Öffnungen jeweilige Sicherungselementenden des Sicherungselements eingeführt sind;
- Fig. 10: eine weitere schematische Perspektivansicht der erfindungsgemäßen Montageanordnung, welche die Anordnung der Komponenten an einem Gehäuse des Koppelgetriebes zeigt; und
- Fig. 11: eine weitere schematische Perspektivansicht der erfindungsgemäßen Montageanordnung, wobei das Sicherungselement in dessen bestimmungsgemäßem Gebrauch elastisch verformt ist, wodurch ein erstes Sicherungselementende des Sicherungselements in einer ersten Öffnung und ein zweites Sicherungselementende des Sicherungselements in einer zweiten Öffnung gesichert formschlüssig und zusätzlich oder alternativ kraftschlüssig gehalten ist.

Nachfolgend sind gleiche und funktionsgleiche Elemente mit den gleichen Bezugszeichen versehen.

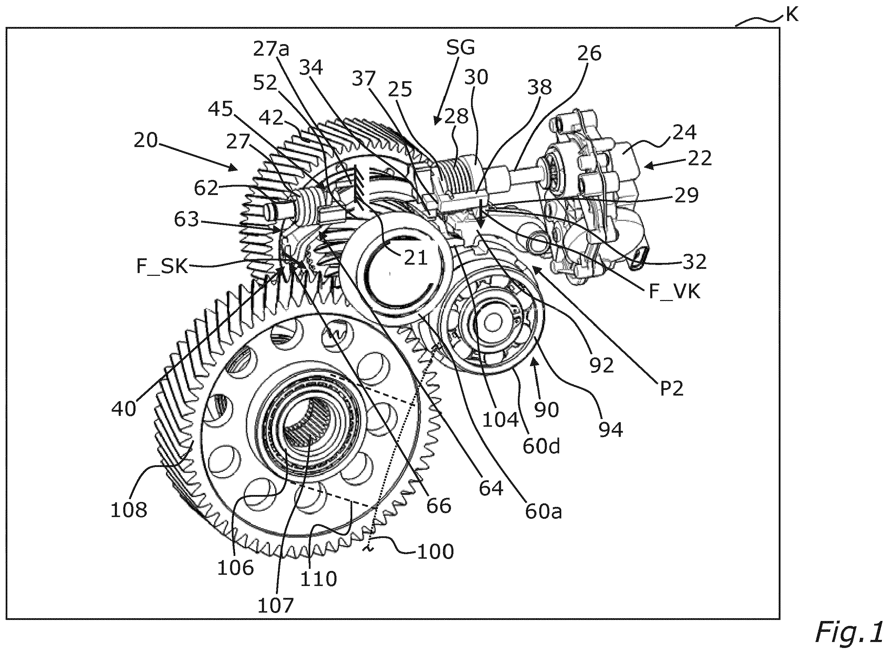

Fig. 1 zeigt in einer schematischen Perspektivansicht ein Kraftfahrzeug K, welches elektrische Antriebsmaschinen 10, Stirnradgetriebe SG mit Koppelgetrieben 20 und Antriebsrädern 100 umfasst. Dabei ist jedem der Stirnradgetriebe SG jeweils eines der Koppelgetriebe 20 zugeordnet. Mit anderen Worten ist jeweils eines der Koppelgetriebe 20 in jeweils eines der Stirnradgetriebe SG des Kraftfahrzeugs K integriert.

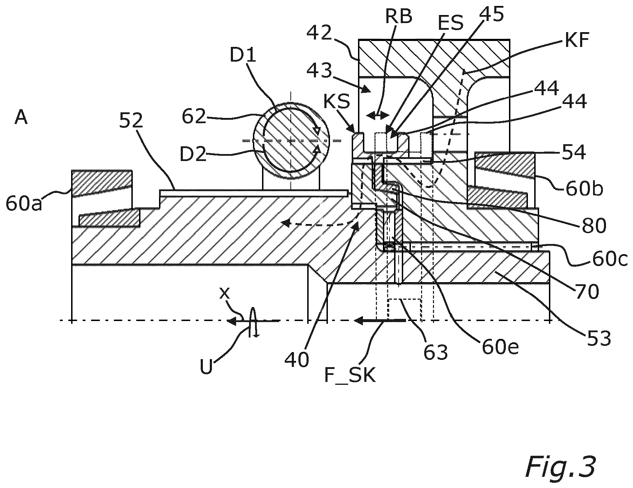

Jede der Antriebsmaschinen 10 ist mit jeweils einem der Stirnradgetriebe SG gekoppelt. Jedes der Stirnradgetriebe SG ist darüber hinaus mit jeweils einem der Antriebsräder 100 koppelbar, indem das jeweilige Koppelgetriebe 20 des jeweiligen Stirnradgetriebes SG von einer Entkoppelungsstellung ES in eine Koppelungsstellung KS geschaltet wird. Die Entkoppelungsstellung ES sowie die Koppelungsstellung KS sind exemplarisch anhand von Fig. 3 zu erkennen. In der Koppelungsstellung KS ist das jeweilige Antriebsrad 100 Drehmoment übertragend mit der jeweiligen Antriebsmaschine 10 gekoppelt, wohingegen die Drehmomentübertragung zwischen Antriebsrad 100 und Antriebsmaschine 10 in der Entkoppelungsstellung ES unterbrochen ist. Mit anderen Worten ist die jeweilige elektrische Antriebsmaschine 10 in der Entkoppelungsstellung ES des jeweiligen Koppelgetriebes 20 von dem jeweiligen Antriebsrad 100 entkoppelt. Insgesamt ist dadurch ein selektives Antreiben der jeweiligen Antriebsräder 100, mithin ein Einzelradantrieb jedes der Antriebsräder 100 ermöglicht. Damit ist also jedes der Antriebsräder 100 durch die diesem jeweils zugeordnete elektrische Antriebsmaschine 10 jeweils unabhängig von den anderen Antriebsrädern 100 antreibbar.

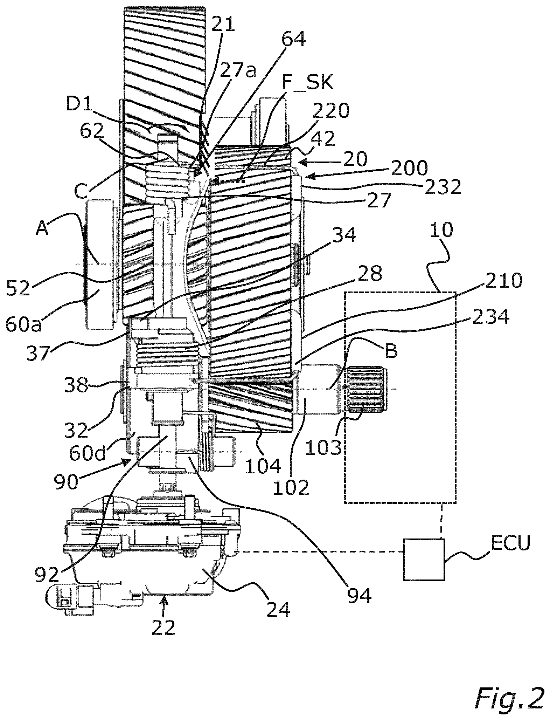

Aus Gründen der Übersichtlichkeit ist in Fig. 1 lediglich eines der Stirnradgetriebe SG mit einem der Koppelgetriebe 20 und lediglich eines der Antriebsräder 100 dargestellt. Nachfolgende Ausführungen zur Antriebsmaschine 10, zum Stirnradgetriebe SG, zum Koppelgetriebe 20 und zum Antriebsrad 100 gelten jedoch für sämtliche Antriebsmaschinen 10, Stirnradgetriebe SG, Koppelgetriebe 20 und Antriebsräder 100 des Kraftfahrzeugs K. Die Antriebsmaschine ist in Fig. 1 verdeckt und daher nicht zu erkennen, jedoch in Fig. 2 schematisch dargestellt. Zudem zeigt Fig. 2 in einer Draufsicht das Koppelgetriebe 20 und damit einen Teilbereich des Stirnradgetriebes SG.

Das Stirnradgetriebe SG umfasst eine erste Getriebewelle 102, wie in der Draufsicht in Fig. 2 zu erkennen ist. Die Getriebewelle 102 ist Drehmoment übertragend mit der elektrischen Antriebsmaschine 10 des Kraftfahrzeugs K gekoppelt. Die Drehmoment übertragende und damit drehfeste Koppelung zwischen der ersten Getriebewelle 102 und der Antriebsmaschine 10 erfolgt dabei lediglich beispielhaft über einen Keilwellenendabschnitt 103, also mit anderen Worten einen Endabschnitt der ersten Getriebewelle 102, welcher eine Keilverzahnung aufweist. Über diese Keilverzahnung ist die erste Getriebewelle 102 mit der elektrischen Antriebsmaschine 10 in Eingriff. Ebenfalls drehfest mit der ersten Getriebewelle 102 gekoppelt ist ein erstes Getriebezahnrad 104. Das erste Getriebezahnrad 104 ist mit einem ersten Zahnrad 42 des Koppelgetriebes 20 in Eingriff. Damit steht das erste Zahnrad 42 des Koppelgetriebes 20 in mittelbarem Eingriff mit der Antriebsmaschine 10, ist also mittelbar mit der Antriebsmaschine 10 gekoppelt.

Das Stirnradgetriebe SG umfasst des Weiteren eine zweite Getriebewelle 106, welche Drehmoment übertragend mit dem Antriebsrad 100 gekoppelt ist. Die erste Getriebewelle 102 und die zweite Getriebewelle 106 sind mittels des Koppelgetriebes 20 durch Einstellen der Koppelungsstellung KS Drehmoment übertragend miteinander koppelbar. Die Koppelung der zweiten Getriebewelle 106 mit dem lediglich abschnittsweise und stark abstrahiert gezeigten Antriebsrad 100 ist aus Gründen der Übersichtlichkeit lediglich in Fig. 1 dargestellt. Die erste Getriebewelle 104 dient der antriebsseitigen Drehmomentübertragung und die zweite Getriebewelle 106 der abtriebsseitigen Drehmomentübertragung. Die Drehmoment übertragende und damit drehfeste Koppelung zwischen der in Fig.1 nur als Wellenstummel dargestellten, zweiten Getriebewelle 106 und dem Antriebsrad 100 erfolgt dabei lediglich beispielhaft über eine Innenverzahnung 107 der zweiten Getriebewelle 106, was in Fig. 1 jedoch nicht explizit erkennbar ist. Das Antriebsrad 100 ist über eine in Fig. 1 gestrichelt dargestellte Antriebsachse 110 mit der Innenverzahnung 107 in Eingriff und dadurch drehfest mit der zweiten Getriebewelle 106 des Stirnradgetriebes SG gekoppelt. Anhand von Fig. 1 ist zudem erkennbar, dass das Koppelgetriebe 20 zur Drehmoment übertragenden Koppelung mit genau einer Seite der Antriebsachse 110 des Kraftfahrzeugs K vorgesehen ist, wodurch ein Einzelradantrieb des Antriebsrades 100 erfolgen kann. Dabei kann die Übertragung des Drehmoments zwischen der elektrischen Antriebsmaschine 10 und dem Antriebsrad 100 ohne Zwischenschaltung eines Differenzialgetriebes erfolgen. Die Übertragung des Drehmoments zwischen der elektrischen Antriebsmaschine 10 und dem Antriebsrad 100 kann also differenzialgetriebefrei (ohne Differenzialgetriebe) erfolgen.

Ebenfalls drehfest mit der zweiten Getriebewelle 106 gekoppelt ist ein zweites Getriebezahnrad 108 des Stirnradgetriebes SG. Das zweite Getriebezahnrad 108 ist mit einem zweiten Zahnrad 52 des Koppelgetriebes 20 in Eingriff. Somit ist das zweite Zahnrad 52 des Koppelgetriebes 20 zumindest mittelbar drehfest mit dem Antriebsrad 100 gekoppelt.

Aus Gründen der Übersichtlichkeit sind jeweilige Zahnradzähne, beispielsweise der (ersten und zweiten) Getriebezahnräder 104, 108 sowie der (ersten und zweiten) Zahnräder 42, 52, in Fig. 1 nicht dargestellt.

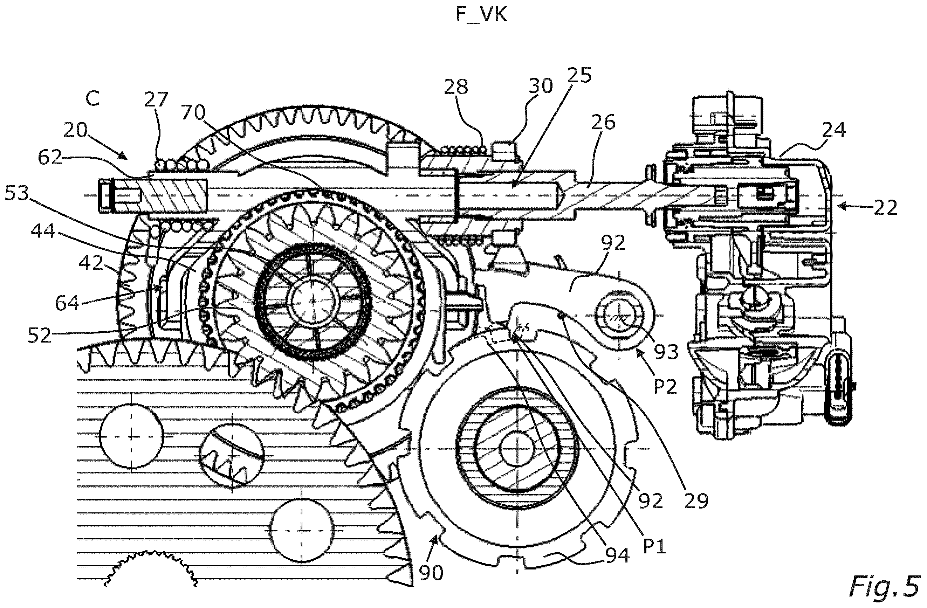

Das Kraftfahrzeug K umfasst zudem eine Parksperrvorrichtung 90, welche ein Parksperrelement 92 umfasst. Das Parksperrelement 92 ist vorliegend als Sperrklinke ausgebildet. Das Parksperrelement 92 kann zwischen einer Parksperrstellung P1, in welcher das Parksperrelement 92 mit einem Parksperrenrad 94 der Parksperrvorrichtung 90 in Eingriff steht und dadurch eine Drehung des Antriebsrades 100 blockiert und einer Entsperrstellung P2 verlagert werden, wie anhand von Fig. 5 zu erkennen ist. In Fig. 5 ist die Parksperrstellung P1 schematisch durch gestrichelte Darstellung von Teilbereichen des Parksperrenrades 94 und des Parksperrelements 92 verdeutlicht. In der beispielsweise in Fig. 1 erkennbaren Entsperrstellung P2 ist das Parksperrelement 92 nicht im Eingriff mit dem Parksperrenrad 94, wodurch die Drehung des Antriebsrades 100 freigegeben, also nicht durch die Parksperrvorrichtung 90 blockiert ist. Anhand von Fig. 2 ist beispielsweise erkennbar, dass das Parksperrenrad 94 drehfest mit der ersten Getriebewelle 102 sowie mit dem ersten Getriebezahnrad 104 und der elektrischen Antriebsmaschine 10 gekoppelt ist. Wie anhand von Fig. 5 ersichtlich ist, kann das Parksperrelement 92 über ein Parksperrelement-Lager 93 an einem vorliegend nicht weiter gezeigten Gehäuse, beispielsweise dem Gehäuse des Stirnradgetriebes SG drehbar gelagert sein und durch eine Schwenkbewegung des Parksperrelements 92 um das Parksperrelement-Lager 93 zwischen der Parksperrstellung P1 und der Entsperrstellung P2 verlagert werden.

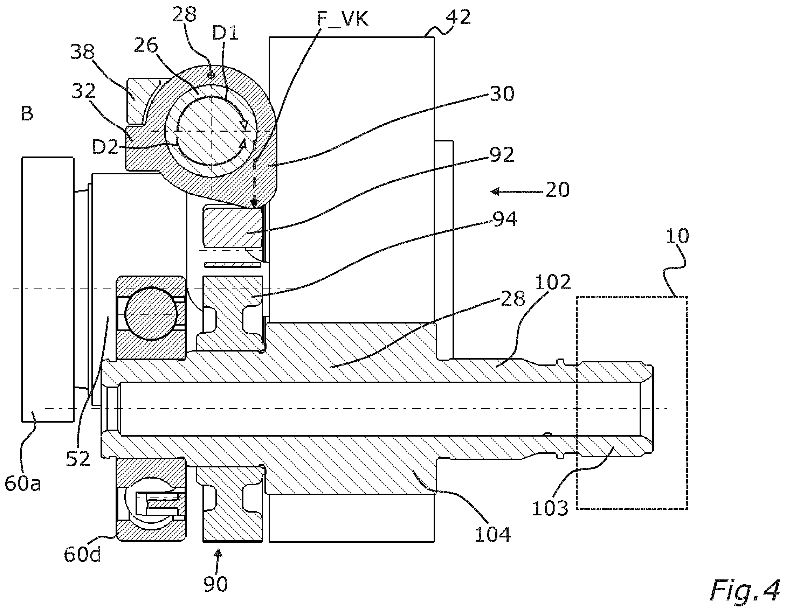

Zur Lagerung des Koppelgetriebes 20 in diesem Gehäuse können beispielsweise mehrere Wälzlager 60a, 60b herangezogen werden, wie anhand von Fig. 3 erkennbar ist. Es ist jedoch klar, dass noch weitere Lager vorgesehen sein können. Die Wälzlager 60a, 60b sind vorliegend als angestellte Zylinderrollenlager ausgebildet, wobei das Wälzlager 60a zur drehbaren Lagerung des zweiten Zahnrades 52 am Gehäuse und das Wälzlager 60b zur drehbaren Lagerung des ersten Zahnrades 42 am Gehäuse dient. Über ein weiteres Wälzlager 60c (siehe Fig. 3), welches vorliegend beispielhaft als Nadellager ausgebildet ist, ist das erste Zahnrad 42 auf einer Welle 53 des zweiten Zahnrades 52 drehbar gelagert und abgestützt. Zudem sind die beiden Zahnräder 42, 52 über ein weiteres Wälzlager 60e nämlich ein Axialnadellager, in Axialerstreckungsrichtung und damit in Richtung einer Drehachse x gegeneinander abgestützt. In Fig. 4 ist gezeigt, dass die erste Getriebewelle 102 und damit das erste Getriebezahnrad 104 über ein weiteres Wälzlager 60d, welches vorliegend beispielhaft als Kugellager ausgebildet ist, am (nicht weiter gezeigten) Gehäuse abgestützt ist.

Das Kraftfahrzeug K umfasst des Weiteren eine Betätigungsvorrichtung 22 mit einem Aktuator 24. Der Aktuator 24 ist einerseits zum Betätigen einer, wenigstens ein Schaltelement 62 aufweisenden Kupplung 40 des Koppelgetriebes 20, die zum Schalten zwischen der Koppelungsstellung KS und der Entkoppelungsstellung ES dient, ausgebildet. Andererseits dient der Aktuator 24 auch zum Verlagern des Parksperrelements 92 zwischen der Parksperrstellung P1 und der Entsperrstellung P2. Das Schaltelement 62 ist beispielsweise als Schaltschwinge oder als Schaltgabel ausgebildet, wie anhand von Fig. 1 zu erkennen ist.

Die Kupplung 40 ist vorliegend als Formschlusskupplung, nämlich als Klauenkupplung, ausgebildet. Das Kraftfahrzeug K umfasst ein Steuergerät ECU, mittels welchem die Betätigungsvorrichtung 22 sowie die elektrische Antriebsmaschine 10 angesteuert werden kann, wie schematisch in Fig. 2 dargestellt ist.

Der Aufbau der Kupplung 40 ist durch Zusammenschau von Fig. 1 mit der Schnittdarstellung in Fig. 3 erkennbar. Die Kupplung 40 umfasst ein erstes Kupplungselement 44, welches zumindest mittelbar, nämlich mittels eines zweiten Kupplungselements 54 der Kupplung 40, drehfest mit dem ersten Zahnrad 42 gekoppelt ist. Das zweite Kupplungselement 54 kann als Festmuffe ausgebildet sein, welche drehfest mit dem ersten Zahnrad 42 gekoppelt sein kann. Vorliegend jedoch ist das zweite Kupplungselement 54 als Verzahnung ausgebildet, welche in einer Zahnradausnehmung 43 des ersten Zahnrades 42 angeordnet, einteilig mit dem ersten Zahnrad 42 verbunden und dadurch drehfest mit dem ersten Zahnrad 42 gekoppelt ist. Durch das zweite Kupplungselement 54 ist das erste Kupplungselement 44 zwar drehfest mit dem ersten Zahnrad 42 gekoppelt, jedoch ist aufgrund der Verzahnung eine relative axiale Verschiebung zwischen dem ersten Kupplungselement 44 und dem zweiten Kupplungselement 54 parallel zu der Drehachse x, um welche sich die Zahnräder 42, 52 beim Betrieb des Kraftfahrzeugs K beispielsweise in einer durch einen Pfeil verdeutlichten Umfangsrichtung U drehen können, möglich.

Zudem umfasst die Kupplung 40 ein Verbindungselement 70, welches einerseits unmittelbar mit dem zweiten Zahnrad 52 gekoppelt und andererseits unmittelbar mit dem ersten Kupplungselement 44 drehfest koppelbar ist, indem das erste Kupplungselement 44 von der Entkoppelungsstellung ES in die Koppelungsstellung KS geschaltet wird. Das Verbindungselement 70 ist vorliegend über jeweilige nicht näher bezeichnete Steckverzahnungen einerseits mit dem ersten Kupplungselement 44 und andererseits mit dem zweiten Zahnrad 52 in Eingriff. Das Verbindungselement 70 kann insbesondere als Festmuffe ausgebildet sein, wie anhand von Fig. 3 zu erkennen ist. Zum Einstellen der Koppelungsstellung KS wird das erste Kupplungselement 44 mit dem Verbindungselement 70 in Eingriff gebracht, wie in Fig. 3 gezeigt ist.

Zum Unterbinden des Schaltens von der Entkoppelungsstellung ES in die Koppelungsstellung KS bei einem Drehzahlunterschied zwischen dem ersten Zahnrad 42 und dem zweiten Zahnrad 52 umfasst die Kupplung 40 ein Sperrelement 80. Das Sperrelement 80 dient zur Freigabe einer das Schalten von der Entkoppelungsstellung ES in die Koppelungsstellung KS bewirkenden Relativbewegung RB zwischen dem ersten Kupplungselement 44 und dem zweiten Kupplungselement 54 bei Drehzahlgleichheit zwischen dem ersten Zahnrad 42 und dem zweiten Zahnrad 52. Bei Drehzahlgleichheit gestattet also das Sperrelement 80 das Bewegen des ersten Kupplungselements 44 und damit das Umschalten von der Entkoppelungsstellung ES in die Koppelungsstellung KS, wobei in der Koppelungsstellung KS der Kraftfluss KF über das erste Zahnrad 42, das zweite Kupplungselement 54, das erste Kupplungselement 44, das Verbindungselement 70 und das zweite Zahnrad 52 geführt werden kann.

Bei anhand der elektrischen Antriebsmaschine 10 hergestellter Drehzahlgleichheit zwischen dem ersten Zahnrad 42 und dem zweiten Zahnrad 52 gibt das Sperrelement 80 also insgesamt die das Schalten von der Entkoppelungsstellung ES in die Koppelungsstellung KS bewirkende Relativbewegung RB zwischen dem ersten Kupplungselement 44 und dem zweiten Kupplungselement 54 frei.

In Fig. 3 ist die jeweilige Position des ersten Kupplungselements 44 zur Verdeutlichung sowohl in der Koppelungsstellung KS als auch in der Entkoppelungsstellung ES (gestrichelte Linien) gezeigt. Von Vorteil ist hierbei, wenn neben dem zweiten Kupplungselement 54 und dem Sperrelement 80, welche jeweils vollständig in der Zahnradausnehmung 43 angeordnet sind, auch das erste Kupplungselement 44 und das Verbindungselement 70 wenigstens teilweise, bevorzugt vollständig, in der Zahnradausnehmung 43 angeordnet sind. Der Kraftfluss KF zwischen dem ersten Zahnrad 42 und dem zweiten Zahnrad 52 ergibt sich auf besonders kleinen Bauraum und erstreckt sich damit über einen besonders kurzen Weg, wenn das erste Kupplungselement 44 nicht nur in der Entkoppelungsstellung ES sondern auch in der Koppelungsstellung KS in der Zahnradausnehmung 43 angeordnet ist.

Das Schaltelement 62 dient zum Einstellen der Koppelungsstellung KS sowie der Entkoppelungsstellung ES. Das Schaltelement 62 umfasst einen ersten Elementarmabschnitt 64 und einen unmittelbar mit dem ersten Elementarmabschnitt 64 verbundenen sowie einen Winkel mit dem ersten Elementarmabschnitt 64 einschließenden, zweiten Elementarmabschnitt 66. Der erste Elementarmabschnitt 64 und der zweite Elementarmabschnitt 66 bilden miteinander eine L-Form, durch welche eine besonders platzsparende und störungsfreie Schaltung ermöglicht ist. In Zusammenschau von Fig. 1 mit

Fig. 3 ist erkennbar, dass das Schaltelement 62 über den zweiten Elementarmabschnitt 66 mit dem ersten Kupplungselement 44 drehbar gekoppelt ist. Dabei kann das Schaltelement 62, insbesondere an dem zweiten Elementarmabschnitt 66, ein Eingriffselement 63, beispielsweise einen Gleitstein, oder einen Eingriffsbereich aufweisen, welche in eine sich zumindest bereichsweise in Umfangsrichtung U erstreckende Eingriffsnut 45 des ersten Kupplungselement 44 eingeführt ist. Das Eingriffselement 63 ist in Fig. 1 erkennbar und schematisch in Fig. 3 gezeigt.

Wird das Schaltelement 62 durch den Aktuator 24 gedreht, so können die Schaltelementarmabschnitte 64, 66 geschwenkt und dadurch ein Verlagern des ersten Kupplungselements 44 zwischen der Koppelungsstellung KS und der Entkoppelungsstellung ES bewirkt werden.

Die Betätigungsvorrichtung 22 umfasst ein mittels des Aktuators 24 verstellbares Betätigungselement 26, welches einerseits zum Ausüben einer Schaltkraft F_SK auf das Schaltelement 62 zum Betätigen der Kupplung 40 und andererseits zum Ausüben einer Verlagerungskraft F_VK, zum Verlagern des Parksperrelements 92 zwischen der Parksperrstellung P1 und der Entsperrstellung P2 ausgebildet ist. Das Betätigungselement 26 ist beispielsweise in Fig. 1 und in Schnittdarstellung in Fig. 5 gezeigt. Das Betätigungselement 26 kann bevorzugt als Welle ausgebildet sein. Diese Welle kann drehfest mit einer Rotorwelle des Aktuators 24 verbunden sein. Alternativ dazu kann das Betätigungselement 26 auch als Rotorwelle des Aktuators 24 ausgebildet sein.

Anhand von Fig. 5 ist erkennbar, dass das Schaltelement 62 in eine Adapterwelle 25 eingeführt ist und dort drehbar gelagert sein kann. Ebenfalls in die Adapterwelle 25 eingeführt ist das Betätigungselement 26. Im Gegensatz zu dem Schaltelement 62 ist vorliegend das Betätigungselement 26 drehfest mit der Adapterwelle 25 verbunden. Die auch in Fig. 1 und Fig. 2 bezifferte Adapterwelle 25 ist vorliegend als Hohlwelle ausgestaltet, wie ebenfalls in Fig. 5 zu erkennen ist. Das Betätigungselement 26 ist über ein als Drehfeder ausgebildetes, und vorliegend auf der Adapterwelle 25 gelagertes erstes Federelement 27 der Betätigungsvorrichtung 22 unmittelbar kraftübertragend mit dem Schaltelement 62 der Kupplung 40 gekoppelt. Über das erste Federelement 27 ist das Schaltelement 62 an einem Gehäuse 21 des Koppelgetriebes 20 federkraftvorgespannt. Da das Betätigungselement 26 in einer zweiten Drehrichtung D2 drehmomentübertragend mit dem Schaltelement 62 gekoppelt ist, ist insgesamt auch das Betätigungselement 26 zumindest mittelbar, nämlich über das Schaltelement 62 und das erste Federelement 27 federkraftvorgespannt an dem Gehäuse 21 abgestützt. Das Gehäuse 21 des Koppelgetriebes 20 ist aus Gründen der Übersichtlichkeit lediglich in Fig. 1 und Fig. 2 gezeigt und dort nur stark abstrahiert und schematisch dargestellt. Dabei ist in Fig. 1 und Fig. 2 gezeigt, dass ein vorzugsweise als Federschenkel ausgebildeter Federelementbereich 27a des ersten Federelements 27 an dem Gehäuse 21 abgestützt ist.

Ebenfalls in Fig. 5 ist erkennbar, dass das Betätigungselement 26 über ein, ebenfalls als Drehfeder ausgebildetes, zweites Federelement 28 der Betätigungsvorrichtung 22 unmittelbar kraftübertragend mit einem Exzenterelement 30 der Betätigungsvorrichtung 30 gekoppelt ist, mittels welchem das Parksperrelement 92 zwischen der Parksperrstellung P1 und der Entsperrstellung P2 verlagerbar ist. Das Exzenterelement 30 ist vorliegend als Nocke ausgebildet, wie anhand von Fig. 4 zu erkennen ist. Alternativ dazu könnte das Exzenterelement 30 auch als exzentrisch gelagerte Kreisscheibe ausgebildet sein, was vorliegend jedoch nicht weiter gezeigt ist.

Das Betätigungselement 26 kann allgemein durch Betreiben des Aktuators 24 in eine Drehrichtung D1 gedreht werden, wodurch sowohl die Schaltkraft F_SK über das erste Federelement 27 auf das Schaltelement 62 als auch die Verlagerungskraft F_VK über das zweite Federelement 28 auf das Exzenterelement 30 ausgeübt werden kann.

In Fig. 1 hält die Betätigungsvorrichtung 22 einen Antriebsschaltzustand aufrecht, in welchem die Koppelungsstellung KS geschaltet und gleichzeitig das Parksperrelement 92 in der Entsperrstellung P2 verlagert gehalten ist. In dem Antriebsschaltzustand ist das Antreiben des Kraftfahrzeugs K durch Koppelung der elektrischen Antriebsmaschine 10 über das Koppelgetriebe 20 mit dem Antriebsrad 100 sichergestellt und gleichzeitig das Parksperrelement 92 offen und damit in der Entsperrstellung ES gehalten ist.

In einem ebenfalls schaltbaren Freigabezustand kann das Kraftfahrzeug K beispielsweise in einem sogenannten Segelbetrieb betrieben, also ein sogenanntes Segeln des Kraftfahrzeugs K ermöglicht werden, in welchem das Kraftfahrzeug K bewegt wird, ohne dass die jeweiligen elektrischen Antriebsmaschinen 10 die jeweiligen Antriebsräder 100 antreiben und ohne dass die jeweiligen Parksperrvorrichtung 90 das Bewegen des Kraftfahrzeugs K, insbesondere das Rollen der jeweiligen Antriebsräder 100, blockiert. Im Freigabezustand ist die Entkoppelungsstellung ES geschaltet und gleichzeitig das Parksperrelement 92 in der Entsperrstellung P2 verlagert gehalten.

Das an dem Gehäuse drehbar gelagerte Parksperrelement 92 wird mittels eines, beispielsweise der Betätigungsvorrichtung 22 zugeordneten, dritten Federelements 29, das - ebenso wie das erste Federelement 27 und das zweite Federelement 28 - als Drehfeder ausgebildet ist, entgegen der Schwerkraft gegen das Exzenterelement 30 gedrückt und dort in der Entsperrstellung P2 gehalten.

Im Freigabezustand liegt ein exzenterelementseitiger Anschlag 32, welcher als Vorsprung ausgebildet ist und auch als dem Exzenterelement 30 zugeordneter Anschlag bezeichnet werden kann, an einem Exzenterelementanschlag 38 an. Der dem Betätigungselement 26 zugeordnete Exzenterelementanschlag 38 ist vorliegend ebenfalls als Vorsprung ausgebildet, wie besonders deutlich in Fig. 4 und auch in Fig. 2 zu erkennen ist. Darüber hinaus liegt im Freigabezustand ein schaltelementseitiger Anschlag 34, welcher als Vorsprung ausgebildet ist und auch als dem Schaltelement 62 zugeordneter Anschlag bezeichnet werden kann, an einem Schaltelementanschlag 37 des Betätigungselements 26 an. Der dem Betätigungselement 26 zugeordnete Schaltelementanschlag 37 ist vorliegend ebenfalls als Vorsprung ausgebildet, wie anhand von Fig. 1 und Fig. 2 zu erkennen ist

Mittels des Schaltelementanschlags 37 kann eine Bewegung, insbesondere Drehung, des Schaltelements 62 relativ zu dem Betätigungselement 26 begrenzt werden. Mittels des Exzenterelementanschlags 38 kann eine Bewegung, insbesondere Drehung, des drehbar auf dem Betätigungselement 26 gelagerten Exzenterelements 30 relativ zu dem Betätigungselement 26 begrenzt werden.

Anhand der Betätigungsvorrichtung 22 kann auch der Antriebsschaltzustand eingestellt werden, bei welchem wie gesagt die Koppelungsstellung KS geschaltet und gleichzeitig das Parksperrelement 92 in der Entsperrstellung P2 verlagert gehalten ist. Im Antriebsschaltzustand ist also das Antriebsrad 100 über das Stirnradgetriebe SG und damit auch das Koppelgetriebe 20 mit der elektrischen Antriebsmaschine 10 gekoppelt und die Parksperrvorrichtung 90 offen, sodass das Antriebsrad 100 durch die elektrische Antriebsmaschine 10 angetrieben werden kann, ohne dass die Parksperrvorrichtung 90 das Antreiben des Antriebsrades 100 blockiert.

Um den Antriebsschaltzustand einzustellen, kann das Betätigungselement 26 anhand des Aktuators 24 entsprechend der in Fig. 2 und in Fig. 3 durch einen Pfeil verdeutlichten Drehrichtung D1 (hier: im Uhrzeigersinn) gedreht werden. Sofern keine Drehzahlgleichheit zwischen dem Zahnrädern 42, 52 besteht, verhindert das Sperrelement 80 das Schalten von der Entkoppelungsstellung ES in die Koppelungsstellung KS und damit die entsprechende Relativbewegung RB des ersten Kupplungselement 44 mittels des Schaltelements 62.

Durch das Drehen des Betätigungselements 26 in der Drehrichtung D1 wird das erste Federelement 27, über welches das Schaltelement 62 und das Betätigungselement 26 kraftübertragend miteinander gekoppelt sind, vorgespannt. Der Aktuator 24 übt hierzu ein Drehmoment aus, durch welches das erste Federelement 27 mechanisch vorgespannt und dadurch die Schaltkraft F_SK in dem ersten Federelement 27 gespeichert wird, solange das Sperrelement 80 das Koppeln des ersten Kupplungselement 44 mit dem Verbindungselement 70 und damit das Einstellen der Koppelungsstellung KS unterbindet. Dabei wird das erste Kupplungselement 44 mittels des ersten Federelements 27 über das Schaltelement 62 und das in der Eingriffsnut 45 angeordnete Eingriffselement 63 sozusagen anhand der Schaltkraft F_SK in Richtung des Sperrelements 80 gedrückt. Das Sperrelement 80 verhindert das Koppeln des ersten Kupplungselements 44 mit dem Verbindungselement 70 solange der Drehzahlunterschied zwischen dem ersten Zahnrad 42 und dem zweiten Zahnrad 52 herrscht. Sobald die elektrische Antriebsmaschine 10 den Drehzahlunterschied ausgeglichen hat und damit Drehzahlgleichheit zwischen den beiden Zahnrädern 42, 52 besteht, gibt das Sperrelement 80 das Koppeln des ersten Kupplungselements 44 mit dem Verbindungselement 70 und damit das Einstellen der Koppelungsstellung KS frei. Infolgedessen bewegt sich das erste Kupplungselement 44 durch das Ausüben der Schaltkraft F_SK in Richtung des Verbindungselements 70 und das erste Kupplungselement 44 wird mit dem Verbindungselement 70 in Eingriff gebracht, wodurch die Koppelungsstellung KS eingestellt wird. Es ist klar, dass beispielsweise bei einer Beschleunigung des Kraftfahrzeugs K aus dessen Stillstand auch ohne Eingriffe der elektrischen Antriebsmaschine 10 Drehzahlgleichheit herrschen kann, sodass dementsprechend auf einen Eingriff der elektrischen Antriebsmaschine 10 verzichtet werden kann, da in diesem Fall kein Drehzahlunterschied besteht.

Ebenfalls durch das Drehen des Betätigungselements 26 in der Drehrichtung D1 wird auch das zweite Federelement 28, über welches das Exzenterelement 30 und das Betätigungselement 26 kraftübertragend miteinander gekoppelt sind, vorgespannt. Durch das anhand des Aktuators 24 ausgeübte Drehmoment kann das zweite Federelement 28 mechanisch vorgespannt werden und dadurch die Verlagerungskraft F_VK in dem zweiten Federelement 28 gespeichert werden, wenn das Verlagern des Parksperrelements 92 von der Entsperrstellung P2 in die Parksperrstellung P1 mechanisch unterbunden ist. Das Verlagern von der Entsperrstellung P2 in die Parksperrstellung P1 kann beispielsweise dann mechanisch unterbunden sein, wenn das Parksperrelement 92 und das Parksperrenrad 94 wie in Fig. 1 gezeigt zueinander orientiert sind, also wenn das Parksperrelement 92 nicht in das Parksperrelement 94 eingreifen kann. Sofern eine Drehzahl der ersten Getriebewelle 102 einen vorbestimmten Drehzahlgrenzwert unterschreitet, also die Drehzahl der ersten Getriebewelle ausreichend klein ist, was beispielsweise bei einer Fahrgeschwindigkeit des Kraftfahrzeugs K von weniger als 5 km/h der Fall sein kann, kann das Parksperrelement 92 (hier: Sperrklinke) mit dem Parksperrenrad 94 in Eingriff gebracht werden, also das Parksperrelement 92 von der Entsperrstellung P2 in die Parksperrstellung PP1 verlagert werden. Hierzu wird das Exzenterelement 30 durch die in dem zweiten Federelement 28 gespeicherte Verlagerungskraft F_VK in der (ersten) Drehrichtung D1 gedreht und drückt das Parksperrelement 92 in eine Position, in welcher das Parksperrelement 92 mit dem Parksperrenrad 94 verrastet und damit die Parksperrstellung P1 eingestellt ist. In diesem Fall ist dann sowohl die Koppelungsstellung KS geschaltet als auch gleichzeitig das Parksperrelement 92 in der Parksperrstellung P1 verlagert gehalten, sodass ein Blockierschaltzustand eingestellt ist. Das Kraftfahrzeug K kann also dann anhand der Parksperrvorrichtung 90 im Stillstand gehalten werden.

Beim Betrieb des Kraftfahrzeugs K ist es also allgemein möglich anhand der Betätigungsvorrichtung 22 das erste Federelement 27 mit der Schaltkraft F_SK und zusätzlich, insbesondere gleichzeitig, das zweite Federelement 28 mit der Verlagerungskraft F_VK in einem jeweils vorgespannten Zustand zu halten. Sobald die Drehzahlgleichheit zwischen den beiden Zahnrädern 42, 52 herrscht, also die beiden Zahnräder 42, 52 jeweils die gleiche Drehzahl (Zahnrad-Drehzahl) aufweisen, kann über das erste Federelement 27, insbesondere durch zumindest teilweises Entspannen des ersten Federelements 27 und dadurch bewirktes Schwenken der Elementarmabschnitte 64, 66 das erste Kupplungselement 44 bewegt und von der Entkoppelungsstellung ES in die Koppelungsstellung KS geschaltet werden. Sobald die Fahrgeschwindigkeit des Kraftfahrzeugs K ausreichend klein ist, kann über das zweite Federelement 28, insbesondere durch zumindest teilweises Entspannen des zweiten Federelements 28, das Parksperrelement 92 mittels des Exzenterelements 30 entgegen einer Federkraft des dritten Federelements 29 bewegt und von der Entsperrstellung P2 in die Parksperrstellung P1 bewegt werden.

Um wiederum den Freigabezustand einzustellen, kann das Betätigungselement 26 durch Betrieb des Aktuators 24 in die, der ersten Drehrichtung D1 entgegengesetzte, zweite Drehrichtung D2 gedreht werden. Zur Einstellung des Freigabezustands ausgehend vom Antriebsschaltzustand und/oder vom Blockierschaltzustand ist der Schaltelementanschlag 37 sowie der schaltelementseitige Anschlag 34 und/oder der Exzenterelementanschlag 38 sowie der exzenterelementseitigen Anschlag 32 besonders nützlich, da die jeweiligen miteinander korrespondierenden Anschläge 37, 34 bzw. 38, 32 ein zuverlässiges Rückstellen des Schaltelements 62 und/oder des Exzenterelements 30 und damit die zuverlässige Einstellung der Entkoppelungsstellung ES sowie der Entsperrstellung PS ermöglichen.

Ein wesentlicher Vorteil des Kraftfahrzeugs K besteht darin, dass durch die beschriebene Anordnung ein unerwünschter Schaltzustand, in welchem die Parksperrstellung P1 und gleichzeitig die Entkoppelungsstellung ES eingestellt ist, zuverlässig ausgeschlossen werden kann. Damit weist das Kraftfahrzeug K ein besonders hohes Maß an Funktionssicherheit auf.

Ein wesentlicher Vorteil des an dem Gehäuse 21 des Koppelgetriebes 20 federkraftvorgespannten Schaltelements 62 besteht darin, dass das Schaltelement 62 (hier: Schaltschwinge) bereits in der Entkoppelungsstellung ES über das erste Federelement 27 federkraftvorgespannt am Gehäuse 21 abgestützt, vorzugsweise maximal vorgespannt abgestützt, sein kann. Das erste Federelement 27 kann bei dessen Entspannung die Bewegung des Schaltelements 62 unterstützen und damit das Schalten von der Entkoppelungsstellung ES in die Koppelungsstellung KS erheblich beschleunigen, wodurch ein besonders verzögerungsarmes Schalten ermöglicht ist und eine besonders hohe Schaltgeschwindigkeit erzielbar ist. Durch das Bewegen von der Koppelungsstellung KS in die Entkoppelungsstellung ES, also infolge des Drehens in die zweite Drehrichtung D2 anhand des Aktuators 24, kann nicht nur die Entkoppelungsstellung ES sowie die Entsperrstellung PS eingestellt, sondern auch das erste Federelement 27 unter Vergrößerung der Federkraftvorspannung gespannt werden.

Denkbar ist auch, dass der Aktuator 24 das Entspannen des ersten Federelements 27 ausschließlich freigibt, sodass das Schalten von der Entkoppelungsstellung ES in die Koppelungsstellung KS ausschließlich durch das erste Federelement 27, also durch Entspannen des ersten Federelements 27 erfolgen kann. Dadurch kann der Aktuator 24 besonders schonend betrieben werden, zumal der Aktuator 24 dann keine starke Beschleunigung des Schaltelements 62 zu dessen Bewegung bewirken muss, sondern die Beschleunigung ausschließlich durch das an dem Gehäuse 21 vorgespannte, erste Federelement 27 erfolgen kann. Durch das Entspannen des am Gehäuse 21 vorgespannten ersten Federelements 27 kann zudem ein besonders schnelles Schalten von der Entkoppelungsstellung ES in die Koppelungsstellung KS erfolgen, insbesondere noch bevor die Antriebsmaschine 10 eine erwünschte Zieldrehzahl erreicht hat.

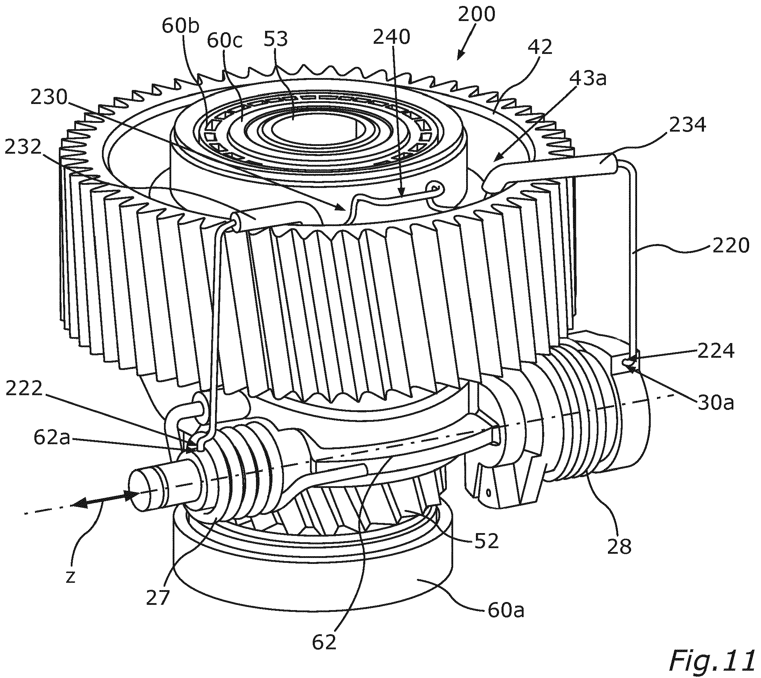

Fig. 11 zeigt in einer schematischen Perspektivansicht eine erfindungsgemäße Montageanordnung 200 für das Koppelgetriebe 20 des Kraftfahrzeugs K.

Die Montageanordnung 200 kann eine Mehrzahl an bei einem Zusammenbau des Koppelgetriebes 20 bei dessen Montage zu montierenden Komponenten umfassen.

Dabei kann die Montageanordnung 200 vorzugsweise sämtliche, in Fig. 11 gezeigten Komponenten, wie beispielsweise die Zahnräder 42, 52 und die Wälzlager 60a-c umfassen, um nur einige der in Fig. 11 gezeigten Komponenten zu nennen.

Das zum Schalten der Kupplung 40 des Koppelgetriebes 20 ausgebildete Schaltelement 62, welches als Schaltschwinge oder als Schaltgabel ausgebildet ist, entspricht dabei einer der Komponenten. Das verschiebbar an dem Schaltelement 62 aufgenommene und zur zumindest mittelbaren federkraftvorgespannten Abstützung an dem Gehäuse 21 des Koppelgetriebes 20 ausgebildete, erste Federelement 27 entspricht einer weiteren der Komponenten.

Um die Montage der Komponenten an dem Gehäuse 21 besonders einfach zu gestalten und etwaige Fehler bei der Montage oder ein unerwünschtes Auseinanderfallen der Komponenten zu verhindern, umfasst die erfindungsgemäße Montageanordnung 200 eine Montagevorrichtung 210. Die Montagevorrichtung 210 kann im fertig hergestellten Zustand des Koppelgetriebes 20 von den Komponenten getrennt und damit reversibel gelöst werden. Dadurch kann die Montagevorrichtung 210 erneut für die Montage eines anderen Koppelgetriebes genutzt werden, wodurch Ressourcen geschont werden.

Die Montagevorrichtung 210, welche allgemein auch als Montagewerkzeug bezeichnet werden kann, umfasst ein Sicherungselement 220, welches ein erstes Sicherungselementende 222 und ein zweites Sicherungselementende 224 aufweist.

Das Sicherungselement 220 ist vorzugsweise aus einem Draht gebildet und besonders bevorzugt als sogenannter Drahtbügel ausgestaltet. Die Ausgestaltung als Draht ermöglicht eine elastische Verformung des Sicherungselements 220 unter Ausübung von Kraft (Verformungskraft). Zudem nimmt das aus Draht gebildete Sicherungselement 220 besonders wenig Bauraum in Anspruch. Der Draht kann vorzugsweise aus Federstahl gebildet sein.

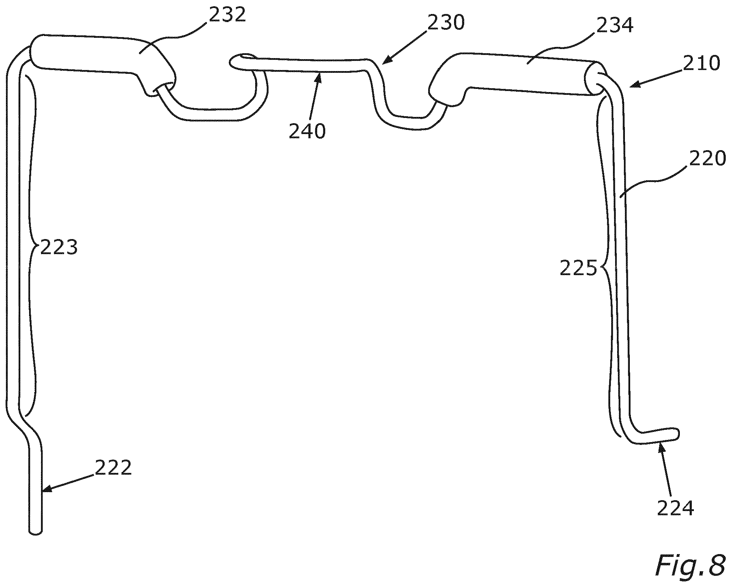

Das Sicherungselement 220 kann eine, in Fig. 8 deutlich erkennbare, im wesentlichen U-förmige Außenkontur aufweisen. Diese U-förmige Außenkontur ergibt sich durch zumindest im Wesentlichen parallel zueinander angeordnete Schenkelbereiche 223, 225 des Sicherungselements 220, nämlich einen ersten Schenkelbereich 223 und einen zweiten Schenkelbereich 225. Der erste Schenkelbereich 223 verbindet das erste Sicherungselementende 222 mit dem Sicherungselementmittelbereich 230, wohingegen der zweite Schenkelbereich 225 den Sicherungselementmittelbereich 230 mit dem zweiten Sicherungselementende 224 verbindet. Die U-förmige Außenkontur gestattet die Nutzung mehrerer Bereiche der Montagevorrichtung 210 bzw. des Sicherungselements 220, wie beispielsweise die beiden Sicherungselementenden 222, 224 und den Sicherungselementmittelbereich 230 zum reversibel lösbaren Fixieren der verschiedenen Komponenten bei deren Montage.

Unter der Maßgabe, wonach die Schenkelbereiche 223, 225 im Wesentlichen parallel zueinander angeordnet sind, ist zu verstehen, dass der erste Schenkelbereich 223 und der zweite Schenkelbereich 225 einen Winkel von 20° oder weniger zwischeneinander einschließen.

Das erste Sicherungselementende 222 ist reversibel lösbar mit dem Schaltelement 62 gekoppelt und dadurch das erste Federelement 27 bei der Montage gegenüber einem Abgleiten von dem Schaltelement 62 gesichert.

Das zweite Federelement 28 ist als eine weitere der Komponenten zumindest mittelbar mit dem zur Verlagerung des Parksperrelements 92 der Parksperrvorrichtung 90 des Kraftfahrzeugs K zwischen der Parksperrstellung P1 und der Entsperrstellung P2 ausgebildeten Exzenterelement 30 gekoppelt. Das Exzenterelement 30 entspricht einer weiteren Komponente der Montageanordnung 200.

Die Montageanordnung 200 kann vorzugsweise die in Fig. 11 gezeigten Komponenten umfassen, wobei die in Fig. 11 gezeigten Komponenten bei deren Montage anhand der Montagevorrichtung 210 gegenüber einem Herunterfallen sowie gegenüber einem Auseinanderfallen gesichert sein können und mittels der Montagevorrichtung 210 an das Gehäuse 21 herangeführt werden können. Insbesondere können die in Fig. 11 gezeigten Komponenten beispielsweise an der Montagevorrichtung 210 aufgehängt oder an der Montagevorrichtung 210 gehalten werden und dadurch besonders verliersicher und gezielt an das Gehäuse 21 herangeführt und beispielsweise am Gehäuse 21 festgelegt werden. Hierzu kann die gesamte Montageanordnung 200 anhand der Montagevorrichtung 210 in Richtung des Gehäuses 21 bewegt und beispielsweise das Wälzlager 60a der Komponenten am Gehäuse 21 festgelegt werden.

Bei der Montage ist das erste Sicherungselementende 222 reversibel lösbar in eine an dem Schaltelement 62 angeordnete, erste Öffnung 62a eingeführt, und das zweite

Sicherungselementende 224 in eine an dem Exzenterelement 30 angeordnete, zweite Öffnung 30a.

Die erste Öffnung 62a und die zweite Öffnung 30a sind vorliegend windschief zueinander orientiert.

Das zweite Federelement 28 ist mittels des zweiten Sicherungselementendes 224 zur Montage der Komponenten gegenüber einem Abgleiten von dem Schaltelement 62 gesichert.

Das erste Federelement 27 und das zweite Federelement 28 sind dabei allgemein bei der Montage in deren Anordnung an dem Schaltelement 62 gegenüber deren jeweiligem Abgleiten in einer durch einen Doppelpfeil in Fig. 11 gezeigten Längsstreckungsrichtung z des Schaltelements 62 zwischen dem ersten Sicherungselementende 222 und dem zweiten Sicherungselementende 224 gesichert gehalten. Die Längserstreckungsrichtung z verläuft entlang einer Drehachse, um welche die Bewegung des Schaltelements 62 gemäß den Drehrichtungen D1, D2 erfolgen kann.

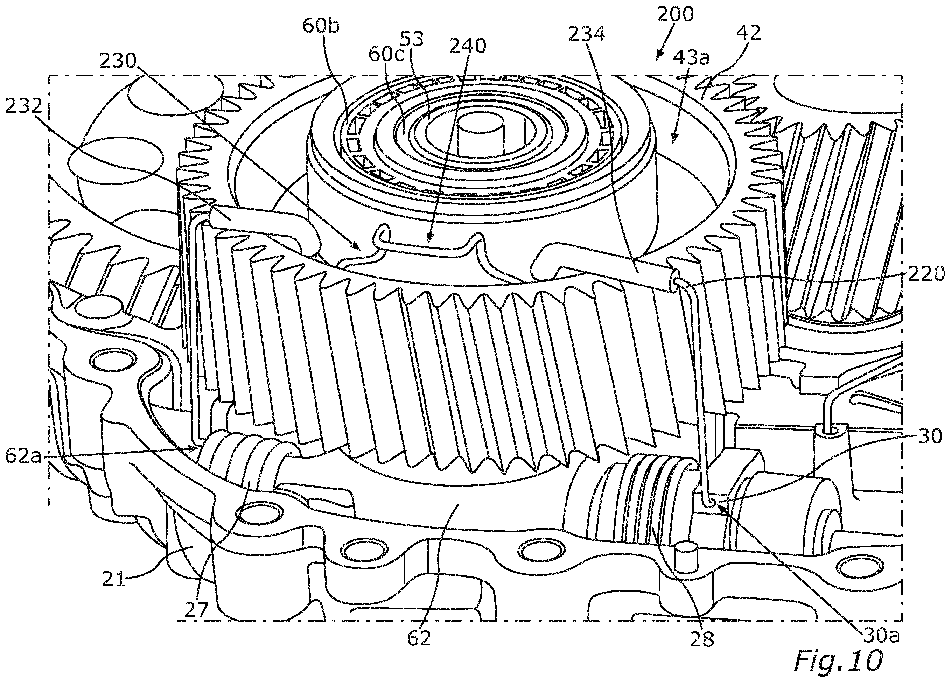

Die Montageanordnung 200 umfasst das erste Zahnrad 42 als eine der Komponenten, wobei der das erste Sicherungselementende 222 und das zweite Sicherungselementende 224 zumindest mittelbar über die Schenkelbereiche 223, 225 verbindende Sicherungselementmittelbereich 230 das erste Zahnrad 42 umgreift, wie anhand von Fig. 10 und Fig. 11 erkennbar ist.

Ein besonders verliersicheres Zusammenhalten der Komponenten ist dadurch gegeben, dass der Sicherungselementmittelbereich 230 in eine Zahnradaussparung 43a des ersten Zahnrades 42 eingreift. Besonders bevorzugt ist der Sicherungselementmittelbereich 230 in der Zahnradaussparung 43a mit dem ersten Zahnrad 42 verspannt.

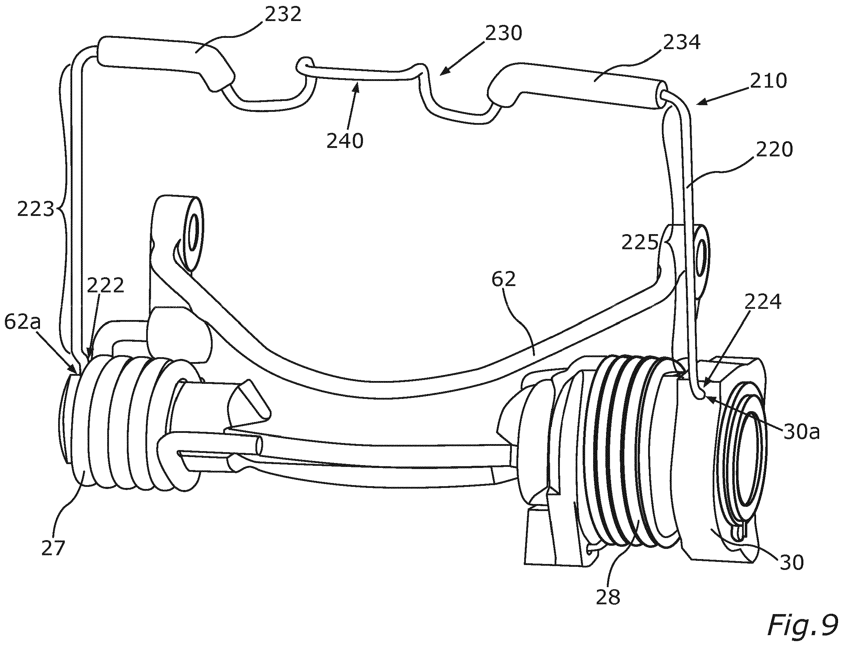

Zur einfachen manuellen Montage weist der Sicherungselementmittelbereich 230 einen zum Halten der Montageanordnung 200 während der Montage ausgebildeten Haltegriffbereich 240 auf, wie anhand der Fig. 8, Fig. 9, Fig. 10 und Fig. 11 besonders deutlich zu erkennen ist. Der Haltegriffbereich 240 kann allgemein als Halte- und Demontagegriff genutzt werden.

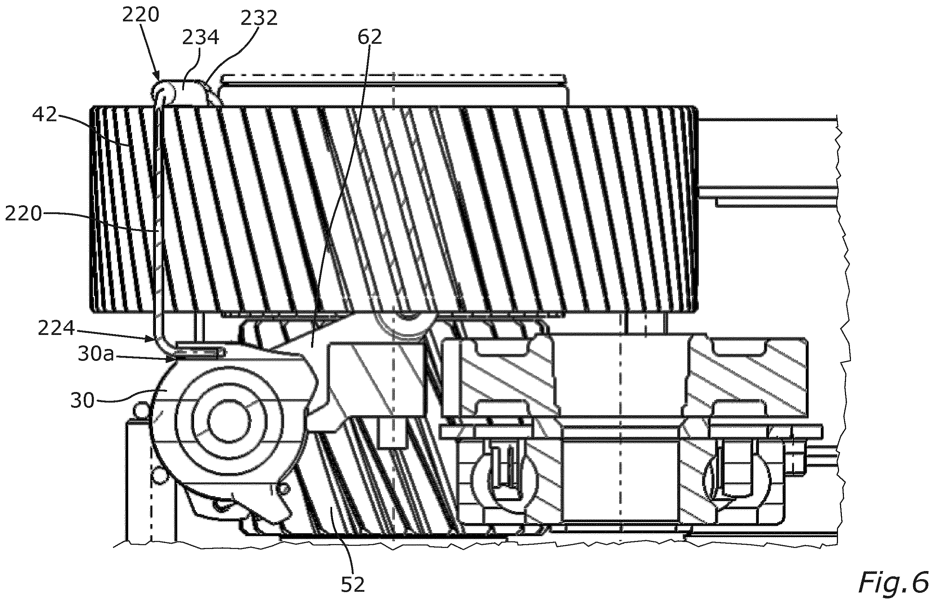

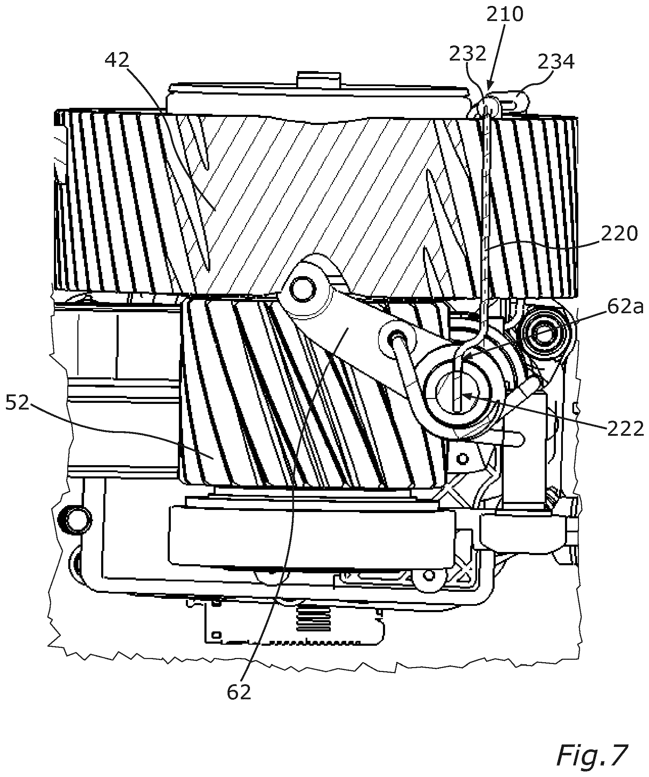

In Fig. 6 bis Fig. 11 ist zudem gezeigt, dass die Montagevorrichtung 210 einen Kontakt des Sicherungselements 220 mit dem ersten Zahnrad 42 bei der Montage unterbindende und mit dem Sicherungselement 220 verbundene Schutzelemente 232, 234 umfasst. Während das Sicherungselement 220 allgemein aus einem Draht gebildet sein kann, können die Schutzelemente 232, 234 beispielsweise aus einem Kunststoff oder aus Gummi bestehen, sodass etwaige, montagebedingte Beschädigungen unterbunden werden können. Die Schutzelemente 232, 234 können allgemein durch Umspritzen des Sicherungselements 220 mit Kunststoff gebildet sein.

Die Montagevorrichtung 210 kann auch bei geringem, verfügbarem Bauraum an das Gehäuse 21 herangeführt, also an deren bestimmungsgemäßen Ort am Koppelgetriebe verbracht werden, so dass die jeweiligen Komponenten ordnungsgemäß auf einfache Weise verbaut werden können. Das Lösen der Montagevorrichtung 210 von den Komponenten der Montageanordnung 200 kann dadurch erfolgen, dass beispielsweise nach der bestimmungsgemäßen Platzierung der Komponenten eine Kraft auf das Sicherungselement 220 ausgeübt wird, sodass wenigstens eines der beiden Sicherungselementenden 222, 224 aus der jeweiligen Öffnung 62a, 30a herausgeführt wird. Im Anschluss daran kann das jeweils verbleibende Sicherungselementende 222, 224 aus der jeweiligen Öffnung 62a, 30a ausgefädelt werden oder herausgezogen werden. So kann beispielsweise infolge des Ausübens der Kraft eine elastische Verformung der Montagevorrichtung 210, insbesondere des Sicherungselements 220, bewirkt werden, durch welche das erste Sicherungselementende 222 bzw. das zweite Sicherungselementende 224 aus der ersten Öffnung 62a, bzw. zweiten Öffnung 30a herausgezogen werden kann. Nach dem Herausziehen des ersten Sicherungselementendes 222 oder des zweiten Sicherungselementendes 224 kann das Ausüben der Kraft beendet und das Sicherungselement 220 entspannt werden, also ein entspannter Zustand des Sicherungselements 220 eingestellt werden. In diesem entspannten Zustand kann das zweite Sicherungselementende 224 bzw. das erste Sicherungselementende 222 aus der zweiten Öffnung 30a bzw. ersten Öffnung 62a herausgezogen werden. Anschließend kann die Montagevorrichtung 210 von den nunmehr für deren bestimmungsgemäßen Gebrauch platzierten Komponenten entfernt werden.

Die Montagevorrichtung 210 (Montagewerkzeug) verhindert ein etwaiges

Auseinanderfallen der einzelnen Komponenten, welche nach deren Montage zumindest teilweise eine Betätigungseinheit des Koppelgetriebes 20 bilden können.

Die Montagevorrichtung 210 kann als Transportsicherung der Komponenten dienen, sodass die Komponenten transportiert werden können, ohne dass das Auseinanderfallen der Montageanordnung 200 riskiert wird.

Die Montagevorrichtung 210 dient als Montagewerkzeug zum Einführen in das Gehäuse 21, insbesondere in ein als Getriebedeckel ausgebildetes Gehäuseteil des Gehäuses 21.

Nach der Montage kann die Montagevorrichtung 210 wieder entfernt und insbesondere wiederverwendet werden, sodass die Montagevorrichtung 210 als Umlaufwerkzeug genutzt werden kann.

Das Sicherungselement 220 kann als Haltebügel ausgebildet sein und dient allgemein dazu, die einzelnen Komponenten zusammenzuhalten. Nachdem die Komponenten durch zusätzliche seitlich angeordnete Bolzen im Getriebedeckel gesichert sind, kann der die Montagevorrichtung 210 und damit das Sicherungselement 220 wieder entfernt werden.

### Bezugszeichenliste

- 10: Antriebsmaschine
- 20: Koppelgetriebe
- 21: Gehäuse
- 22: Betätigungsvorrichtung
- 24: Aktuator
- 25: Adapterwelle
- 26: Betätigungselement
- 27: erstes Federelement
- 27a: Federelementbereich
- 28: zweites Federelement
- 29: drittes Federelement
- 30: Exzenterelement
- 30a: zweite Öffnung
- 32: exzenterelementseitiger Anschlag
- 34: schaltelementseitiger Anschlag
- 37: Schaltelementanschlag
- 38: Exzenterelementanschlag
- 40: Kupplung
- 42: erstes Zahnrad
- 43: Zahnradausnehmung
- 43a: Zahnradaussparung
- 44: erstes Kupplungselement
- 45: Eingriffsnut
- 52: zweites Zahnrad
- 53: Welle
- 54: zweites Kupplungselement
- 60a-e: Wälzlager
- 62: Schaltelement (Schaltschwinge, Schaltgabel)
- 62a: erste Öffnung
- 63: Eingriffselement
- 64: erster Elementarmabschnitt
- 66: zweiter Elementarmabschnitt
- 70: Verbindungselement
- 80: Sperrelement
- 90: Parksperrvorrichtung
- 92: Parksperrelement
- 93: Parksperrelement-Lager
- 94: Parksperrenrad
- 100: Antriebsrad
- 102: erste Getriebewelle
- 103: Keilwellenendabschnitt
- 104: erstes Getriebezahnrad
- 106: zweite Getriebewelle
- 107: Innenverzahnung
- 108: zweites Getriebezahnrad
- 110: Antriebsachse
- 200: Montageanordnung
- 210: Montagevorrichtung
- 220: Sicherungselement
- 222: erstes Sicherungselementende
- 223: erster Schenkelbereich
- 224: zweites Sicherungselementende
- 225: zweiter Schenkelbereich
- 230: Sicherungselementmittelbereich
- 232: erstes Schutzelement
- 234: zweites Schutzelement
- 240: Haltegriffbereich
- D1: (erste) Drehrichtung
- D2: (zweite) Drehrichtung
- ECU: Steuergerät
- F_SK: Schaltkraft
- F_VK: Verlagerungskraft
- K: Kraftfahrzeug
- KF: Kraftfluss
- KS: Koppelungsstellung
- ES: Entkoppelungsstellung
- P1: Parksperrstellung
- P2: Entsperrstellung
- RB: Relativbewegung
- SG: Stirnradgetriebe
- U: Umfangsrichtung
- x: Drehachse
- z: Längserstreckungsrichtung

## Patentansprüche

1. Montageanordnung (200) für ein Koppelgetriebe (20) eines Kraftfahrzeugs (K),
umfassend bei einem Zusammenbau des Koppelgetriebes (20) bei dessen Montage zu montierende Komponenten, von welchen
- ein Schaltelement (62) einer der Komponenten entspricht, welches zum Schalten einer Kupplung (40) des Koppelgetriebes (20) ausgebildet ist,
- wenigstens ein erstes Federelement (27) einer der Komponenten entspricht, welches verschiebbar an dem Schaltelement (62) aufgenommen ist und welches zur zumindest mittelbaren federkraftvorgespannten Abstützung an einem Gehäuse (21) des Koppelgetriebes (20) ausgebildet ist,
wobei die Montageanordnung (200) eine im fertig hergestellten Zustand des Koppelgetriebes (21) von den Komponenten getrennte Montagevorrichtung (210) umfasst, welche ein Sicherungselement (220) mit einem ersten Sicherungselementende (222) und einem zweiten Sicherungselementende (224) aufweist, von welchen zumindest das erste Sicherungselementende (222) reversibel lösbar mit dem Schaltelement (62) gekoppelt ist und dadurch das erste Federelement (27) bei der Montage gegenüber einem Abgleiten von dem Schaltelement (62) sichert und die Komponenten mittels der Montagevorrichtung (210) verliersicher zusammengehalten werden.

2. Montageanordnung (200) nach Anspruch 1,
**dadurch gekennzeichnet, dass**
die Montageanordnung (200) ein zweites Federelement (28) als eine der Komponenten umfasst, welches zumindest mittelbar mit einem zur Verlagerung eines Parksperrelements (92) einer Parksperrvorrichtung (90) des Kraftfahrzeugs (K) zwischen einer Parksperrstellung (P1) und einer Entsperrstellung (P2) ausgebildeten Exzenterelement (30) als eine der Komponenten gekoppelt ist.

3. Montageanordnung (200) nach Anspruch 2,
**dadurch gekennzeichnet, dass**
das erste Sicherungselementende (222) reversibel lösbar in eine an dem Schaltelement (62) angeordnete, erste Öffnung (62a) eingeführt ist, und das zweite Sicherungselementende (224) in eine an dem Exzenterelement (30) angeordnete, zweite Öffnung (30a) eingeführt ist.

4. Montageanordnung (200) nach Anspruch 3,
**dadurch gekennzeichnet, dass**
die erste Öffnung (62a) und die zweite Öffnung (30a) windschief zueinander orientiert sind.

5. Montageanordnung (200) nach einem der Ansprüche 2 bis 4,
**dadurch gekennzeichnet, dass**
das zweite Federelement (28) mittels des zweiten Sicherungselementendes (224) zumindest zur Montage der Komponenten gegenüber einem Abgleiten von dem Schaltelement (62) gesichert ist.

6. Montageanordnung (200) nach einem der Ansprüche 2 bis 5,
**dadurch gekennzeichnet, dass**
das erste Federelement (27) und das zweite Federelement (28) in deren Anordnung an dem Schaltelement (62) gegenüber deren jeweiligem Abgleiten in Längsstreckungsrichtung (z) des Schaltelements (62) zwischen dem ersten Sicherungselementende (222) und dem zweiten Sicherungselementende (224) gesichert gehalten sind.

7. Montageanordnung (200) nach einem der vorhergehenden Ansprüche,
**dadurch gekennzeichnet, dass**
die Montageanordnung (200) ein erstes Zahnrad (42) als eine der Komponenten umfasst und ein das erste Sicherungselementende (222) und das zweite Sicherungselementende (224) verbindender Sicherungselementmittelbereich (230) das erste Zahnrad (42) umgreift.

8. Montageanordnung (200) nach Anspruch 7,
**dadurch gekennzeichnet, dass**
der Sicherungselementmittelbereich (230) in eine Zahnradaussparung (43a) des ersten Zahnrades (42) eingreift.

9. Montageanordnung (200) nach Anspruch 7 oder 8,
**dadurch gekennzeichnet, dass**
der Sicherungselementmittelbereich (230) einen zum Halten der Montageanordnung (200) während der Montage ausgebildeten Haltegriffbereich (240) aufweist.

10. Montageanordnung (200) nach einem der Ansprüche 7 bis 9,
**dadurch gekennzeichnet, dass**
die Montagevorrichtung (210) wenigstens ein, einen Kontakt des Sicherungselements (220) mit dem ersten Zahnrad (42) bei der Montage unterbindendes und mit dem Sicherungselement (220) verbundenes Schutzelement (232, 234) umfasst.

## Claims

1. Assembly arrangement (200) for a coupling transmission (20) of a motor vehicle (K), comprising components to be assembled during assembly of the coupling transmission (20), of which
• a switching element (62) corresponds to one of the components, which is designed for switching a clutch (40) of the coupling transmission (20),
• at least one first spring element (27) corresponds to one of the components, which is displaceably received on the switching element (62) and which is designed for at least indirect spring-force-preloaded support on a housing (21) of the coupling transmission (20),
wherein the assembly arrangement (200) comprises an assembly device (210) which is separate from the components in the finished state of the coupling transmission (21), which has a securing element (220) with a first securing element end (222) and a second securing element end (224), of which at least the first securing element end (222) is reversibly releasably coupled with the switching element (62) and thereby secures the first spring element (27) against sliding off the switching element (62) during assembly, and the components are held together captively by means of the assembly device (210).

2. Assembly arrangement (200) according to claim 1,
**characterized in that**
the assembly arrangement (200) comprises a second spring element (28) as one of the components, which is at least indirectly coupled with an eccentric element (30) as one of the components, said eccentric element being designed for displacing a parking lock element (92) of a parking lock device (90) of the motor vehicle (K) between a parking lock position (P1) and an unlocked position (P2).

3. Assembly arrangement (200) according to claim 2,
**characterized in that**
the first securing element end (222) is reversibly releasably inserted into a first opening (62a) arranged on the switching element (62), and the second securing element end (224) is inserted into a second opening (30a) arranged on the eccentric element (30).

4. Assembly arrangement (200) according to claim 3,
**characterized in that**
the first opening (62a) and the second opening (30a) are oriented skew to each other.

5. Assembly arrangement (200) according to one of claims 2 to 4,
**characterized in that**
the second spring element (28) is secured by means of the second securing element end (224) at least for assembly of the components against sliding off the switching element (62).

6. Assembly arrangement (200) according to one of claims 2 to 5,
**characterized in that**
the first spring element (27) and the second spring element (28) in their arrangement on the switching element (62) are held secured against their respective sliding off in the longitudinal extension direction (z) of the switching element (62) between the first securing element end (222) and the second securing element end (224).

7. Assembly arrangement (200) according to one of the preceding claims,
**characterized in that**
the assembly arrangement (200) comprises a first gear (42) as one of the components and a securing element middle region (230) connecting the first securing element end (222) and the second securing element end (224) encompasses the first gear (42).

8. Assembly arrangement (200) according to claim 7,
**characterized in that**
the securing element middle region (230) engages in a gear recess (43a) of the first gear (42).

9. Assembly arrangement (200) according to claim 7 or 8,
**characterized in that**
the securing element middle region (230) has a handle grip region (240) designed for holding the assembly arrangement (200) during assembly.

10. Assembly arrangement (200) according to one of claims 7 to 9,
**characterized in that**
the assembly device (210) comprises at least one protective element (232, 234) preventing contact of the securing element (220) with the first gear (42) during assembly and connected to the securing element (220).

## Revendications

1. Ensemble de montage (200) pour une transmission d'accouplement (20) d'un véhicule automobile (K), comprenant des composants à monter lors de l'assemblage de la transmission d'accouplement (20) lors de son montage, parmi lesquels
• un élément de commutation (62) correspond à l'un des composants, qui est conçu pour commuter un embrayage (40) de la transmission d'accouplement (20),
• au moins un premier élément de ressort (27) correspond à l'un des composants, qui est reçu de manière déplaçable sur l'élément de commutation (62) et qui est conçu pour un appui au moins indirect précontraint par force de ressort sur un boîtier (21) de la transmission d'accouplement (20),
dans lequel l'ensemble de montage (200) comprend un dispositif de montage (210) qui est séparé des composants à l'état fini de la transmission d'accouplement (21), lequel présente un élément de fixation (220) avec une première extrémité d'élément de fixation (222) et une deuxième extrémité d'élément de fixation (224), dont au moins la première extrémité d'élément de fixation (222) est couplée de manière réversible détachable avec l'élément de commutation (62) et assure ainsi la fixation du premier élément de ressort (27) contre un glissement hors de l'élément de commutation (62) lors du montage, et les composants sont maintenus ensemble de manière captive au moyen du dispositif de montage (210).

2. Ensemble de montage (200) selon la revendication 1,
**caractérisé en ce que**
l'ensemble de montage (200) comprend un deuxième élément de ressort (28) comme l'un des composants, lequel est couplé au moins indirectement avec un élément excentrique (30) comme l'un des composants, ledit élément excentrique étant conçu pour déplacer un élément de verrouillage de stationnement (92) d'un dispositif de verrouillage de stationnement (90) du véhicule automobile (K) entre une position de verrouillage de stationnement (P1) et une position de déverrouillage (P2).

3. Ensemble de montage (200) selon la revendication 2,
**caractérisé en ce que**
la première extrémité d'élément de fixation (222) est introduite de manière réversible détachable dans une première ouverture (62a) disposée sur l'élément de commutation (62), et la deuxième extrémité d'élément de fixation (224) est introduite dans une deuxième ouverture (30a) disposée sur l'élément excentrique (30).

4. Ensemble de montage (200) selon la revendication 3,
**caractérisé en ce que**
la première ouverture (62a) et la deuxième ouverture (30a) sont orientées de manière gauche l'une par rapport à l'autre.

5. Ensemble de montage (200) selon l'une des revendications 2 à 4,
**caractérisé en ce que**
le deuxième élément de ressort (28) est fixé au moyen de la deuxième extrémité d'élément de fixation (224) au moins pour le montage des composants contre un glissement hors de l'élément de commutation (62).

6. Ensemble de montage (200) selon l'une des revendications 2 à 5,
**caractérisé en ce que**
le premier élément de ressort (27) et le deuxième élément de ressort (28) dans leur disposition sur l'élément de commutation (62) sont maintenus fixés contre leur glissement respectif dans la direction d'extension longitudinale (z) de l'élément de commutation (62) entre la première extrémité d'élément de fixation (222) et la deuxième extrémité d'élément de fixation (224).

7. Ensemble de montage (200) selon l'une des revendications précédentes,
**caractérisé en ce que**
l'ensemble de montage (200) comprend un premier engrenage (42) comme l'un des composants et une région médiane d'élément de fixation (230) reliant la première extrémité d'élément de fixation (222) et la deuxième extrémité d'élément de fixation (224) entoure le premier engrenage (42).

8. Ensemble de montage (200) selon la revendication 7,
**caractérisé en ce que**
la région médiane d'élément de fixation (230) s'engage dans un évidement d'engrenage (43a) du premier engrenage (42).

9. Ensemble de montage (200) selon la revendication 7 ou 8,
**caractérisé en ce que**
la région médiane d'élément de fixation (230) présente une région de poignée de préhension (240) conçue pour maintenir l'ensemble de montage (200) pendant le montage.

10. Ensemble de montage (200) selon l'une des revendications 7 à 9,
**caractérisé en ce que**
le dispositif de montage (210) comprend au moins un élément de protection (232, 234) empêchant un contact de l'élément de fixation (220) avec le premier engrenage (42) lors du montage et relié à l'élément de fixation (220).
